# EUROPEAN PATENT APPLICATION

(11) **EP 1 469 296 A1**
(43) Date of publication of application: **20.10.2004**
(21) Application number: 03008555.9
(22) Date of filing: 14.04.2003
(51) Int. Cl.: G01M 3/36

(54) **Process and apparatus for checking sealor tightness of a package made of flexible or semirigid material**

(71) Applicant: Campanini, Lorenzo, 43036 Fidenza (Parma) (IT); Magnani, Gabriele, 43039 Salsomaggiore T. (Parma) (IT)
(72) Inventor: Campanini, Lorenzo, 43036 Fidenza (Parma) (IT); Magnani, Gabriele, 43039 Salsomaggiore T. (Parma) (IT)
(74) Representative: Guareschi, Antonella

(57) **Abstract**

The invention refers to the field of processes and apparata for checking seal or tightness of packages of products packaged in flexible or semi-rigid cases. The process is based on the detection of the vacuum degree being present in a chamber in which the product to be tested is placed in two consecutive times after the internal packaging pressure has reached a preset value. The device provides a tight-sealed chamber in which the package to be tested is placed and that is able to be connected to a vacuum system through a valve adapted to keep the internal packaging pressure constant by making the sealed chamber vacuum adequate. A measuring device is provided for the vacuum degree inside the chamber, and a first measure occurs upon reaching a prefixed inside packaging pressure, and a second measure occurs after a certain interval of time.

## Description

The present invention deals with a process and an apparatus for checking seal or tightness of a package made of flexible or semirigid material.

In order to store food and pharmaceutical products, different technologies are employed, among which the most used one is packaging products in tight vessels made of plastic or metallic material that is sealed through heat-sealing or through highfrequency sealing.

For some products that with oxygen becomes oxidised and deteriorated, the prior art provides for creating vacuum in the vessel or case (vacuum packaging) or for inserting an inert gas into the package possibly under a light pressure.

For products that are scarcely able to be deteriorated or with short-time expiries or for which control liquid are inserted in the package (for example mozzarelle), the pressure inside the package can be room pressure.

In all types of food or pharmaceuticals packaging, the final check of package tightness is compulsory before marketing such products.

There are already several technologies to check packaging tightness, regarding both the presence of micropores in the film of plastic material used, and the presence of holes or openings that can be easily found next to the seals.

One of the most recent techniques provides for the insertion of an inert gas, helium type, into the package in small percentages so that, by placing the package under vacuum, if there are openings, the ejected gas can be detected by suitable detecting devices that signal when gas comes out of the package that can be discarded.

This technique is costly due to the use of rare and costly inert gases that need, among other things, very complex and costly systems for storing gases and inserting gases into the package.
Object of the present invention is reducing the control times to increase process productivity.

A further object is obtaining more accuracy when detecting the leakage.

A further object of the invention is being able to perform the check even when there are possible leakages in the vacuum chamber.

This and other features will be better pointed out by the following description of a preferred, but not exclusive embodiment, shown, purely as a non-limiting example, in the enclosed drawings in which:
- figure 1 schematically shows the apparatus whose operation carries out the process of the present invention;
- figure 2 shows the vacuum diagram in case of a compliant package;
- figure 3 shows the vacuum diagram in case of a faulty package.

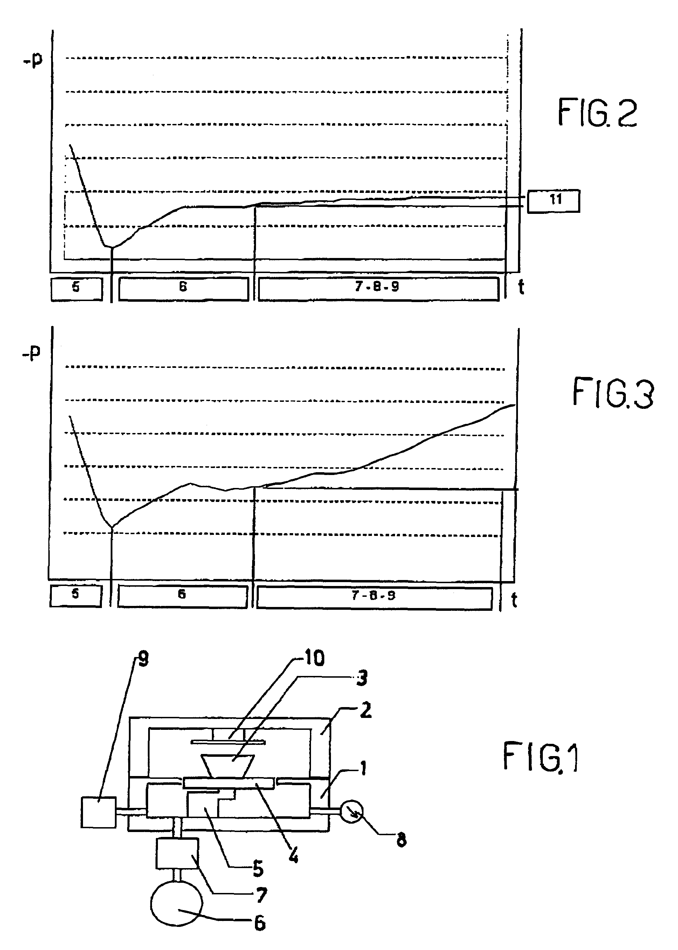

With reference to figure 1, reference 1 shows a chamber that is tightly closed on its top by a cover 2 and in which a package 3 to be tested is placed.

Reference 4 shows a package abutment plane that contains a load cell 5 to measure the internal pressure of the package itself through a thrust exerted on the load cell when inflating again the package against a porous striker 10 that makes the internal package pressure increase when the vacuum chamber vacuum increases.

Reference 6 shows a vacuum pump connected to the chamber by interposing a valve 7.

A manometer 8 is connected to the chamber 1 to detect the vacuum degree that is created into the chamber when checking the package as described below.

Reference 9 shows a return valve to atmospheric pressure in order to be able to quickly remove the tested package from the chamber.

Advantageously, but not exclusively, the parts in contact with the package, namely abutment plane 4 and upper striker 10 can be made of porous material since the package surface would be squashed by adhering to the surface and, if it is not porous, could be closed and impair the possible leakage.

The device operation will now be described.

The cover 2 of the chamber 1 is opened to insert a package 3 to be tested by abutting it onto the plane 4 and therefore onto the load cell 5.

The chamber cover is then closed to carry out the chamber seal and vacuum is started to be created in the chamber by opening valve 7 till a certain internal package pressure is reached. Said internal pressure value is measured by the load cell 5.

The internal package pressure settling is waited for a certain time and simultaneously the valve working with PID (Proportional Integral Derivative) algorithm tries to keep the internal package pressure constant (internal pressure determined by the weight imposed on the load cell), and in order to do so, the chamber vacuum degree must be acted upon depending on the internal package pressure difference (variation).

Simultaneously, the apparatus carries out the vacuum degree measure reached in chamber 1.

After a short wait, the vacuum degree reached in said chamber 1 is measured again.

After having carried out the test, the chamber 1 is put again to room pressure by operating on valve 9.

Depending on two measures of the vacuum degree reached in the chamber, the following conditions can occur:
- if at the end of the test, the first pressure measure is substantially equal to the second one, this means that the package is sealed (see figure 2);
- if at the end of the test, the first vacuum measure is greater that the second one, this means that, in order to keep a constant internal pressure, the external vacuum degree has had to be increased and therefore the package is not sealed (see figure 3);
- if, in order to reach an internal package pressure, a maximum set vacuum degree has been exceeded, this means that the package has scarce gas or air inside it and therefore it must be discarded because it does not guarantee the correct product storage inside it;
- if, in order to reach the internal package pressure, a minimum set vacuum degree has not been exceeded, this means that the package has too much gas or air inside it and therefore it has to be discarded because it makes the package appearance unpleasant and difficult to be handled or packaged in cardboards.

With the above-described device several advantages can be reached, among which the following can be listed:
- having a load cell placed under the package to be checked, such load cell being necessary to convert the force operating on the pressurised cell inside the package, it is possible to weigh the package and check whether it remains inside the preset tolerance (weight check);
- this type of test enables the sealing check since, by placing the package under vacuum, the package is inflated between cell and porous abutment, and the more vacuum increases, the more a sealing stress occurs and therefore one is more certain about their seal.

The valve PID algorithm favours the automatic device adaptation to different types of package, namely for different volumes.

The valve also compensates for a possible chamber leakage and therefore also when such leakage occurs, the test is not impaired. As possible embodiment variation, the load cell can be provided placed on the upper striker 10 or on side striker walls on which the package is pressed, these side wall also being preferably made of porous material.

## Claims

1. Apparatus for checking seal and tightness of a package made of flexible or semirigid material of a type comprising a chamber equipped with a sealing cover, and a vacuum system connected to said chamber, **characterised in that** it comprises:
- an abutment plane for the package to be tested placed inside said chamber;
- an instrument to measure the internal package pressure;
- a valve inserted on the duct connecting the vacuum system to the chamber, said valve being adapted to keep the internal package pressure constant by changing the chamber vacuum degree;
- a measuring device for the vacuum degree inside the chamber, adapted to measure said vacuum degree at different times in the check phase.

2. Apparatus according to claim 1, **characterised in that** it comprises a valve, inserted between chamber and atmosphere, adapted to keep the internal package pressure constant by changing the vacuum degree in the chamber connected to the vacuum pump.

3. Apparatus according to claim 1, **characterised in that** the instrument for measuring the internal package pressure comprises a package abutment plane in which a load cell is inserted and a fixed striker plane placed over the abutment plane.

4. Apparatus according to claim 1, **characterised in that** the instrument for measuring the internal package pressure comprises a package abutment plane and a striker plane placed thereabove in which a load cell is inserted.

5. Apparatus according to claim 1, **characterised in that** the instrument for measuring the internal package pressure comprises a package abutment plane and side striker walls in which load cells are inserted.

6. Apparatus according to any one of claims I to 4, **characterised in that** the package abutment plane and the upper striker plane and/or the side walls among which the package is inserted are made of porous material.

7. Apparatus according to claim 1, **characterised in that** it comprises a valve that operates with the PID algorithm depending on internal package pressure variations.

8. Process for checking seal or tightness of packages made of flexible or semirigid material, **characterised in that** it provides for the insertion of the package to be tested into a chamber in which vacuum is created up to a pre-established value and for the measure of two sequential values of internal package pressure, keeping said vacuum constant.

## Amended claims

### Amended claims in accordance with Rule 86(2) EPC.

**1.** Apparatus for checking seal and tightness of a package made of flexible or semirigid material of a type comprising a chamber (1) equipped with a sealing cover, (2) and a vacuum system connected to said chamber, **characterised in that** it comprises:
- an abutment plane (4) for the package to be tested placed inside said chamber (1);
- an instrument to measure the internal package pressure;
- a valve (7) inserted on the duct connecting the vacuum system to the chamber (1), said valve being adapted to keep the internal package pressure constant by changing the chamber vacuum degree;
- a measuring device (8) for the vacuum degree inside the chamber, adapted to measure said vacuum degree at different times in the check phase.

**2.** Apparatus according to claim 1, **characterised in that** it comprises a valve (9), inserted between chamber and atmosphere, adapted to keep the internal package pressure constant by changing the vacuum degree in the chamber connected to the vacuum pump.

**3.** Apparatus according to claim 1, **characterised in that** the instrument for measuring the internal package pressure comprises a package abutment plane (4) in which a load call (5) is inserted and a fixed striker plane (10) placed over the abutment plane.

**4.** Apparatus according to claim 1, **characterised in that** the instrument for measuring the internal package pressure comprises a package abutment plane (4) and a striker plane (10) placed thereabove in which a load cell is inserted.

**5.** Apparatus according to claim 1, **characterised in that** the instrument for measuring the internal package pressure comprises a package abutment plane and side striker walls in which load cells are inserted.

**6.** Apparatus according to any one of claims 1 to 4, **characterised in that** the package abutment plane and the upper striker plane and/or the side walls among which the package is inserted are made of porous material.

**7.** Apparatus according to claim 1, **characterised in that** it comprises a valve (7) that operates with the PID algorithm depending on internal package pressure variations.
